# EUROPÄISCHE PATENTSCHRIFT

(11) **EP 2 631 049 B1**
(45) Veröffentlichungstag und Bekanntmachung des Hinweises auf die Patenterteilung: **28.09.2016**
(21) Anmeldenummer: 12001160.6
(22) Anmeldetag: 22.02.2012
(51) Int. Cl.: B29B 11/16, B29C 70/20, B29C 65/50, B29D 30/38, B29D 30/42, B29D 30/46, B29C 65/08, B29C 65/10, B29C 65/16, B29C 65/14

(54) **Verfahren und Vorrichtung zum Herstellen einer Halbzeug-Bahn**
Method and device for producing a semi-finished sheet
Procédé et dispositif de fabrication d'une bande de produit semi-fini

(43) Veröffentlichungstag der Anmeldung: 28.08.2013
(73) Patentinhaber: KARL MAYER Technische Textilien GmbH, 09117 Chemnitz (DE)
(72) Erfinder: Glöckner, René, 09575 Eppendorf (DE); Pander, Lutz, 09113 Chemnitz (DE)
(74) Vertreter: Knoblauch, Andreas

(56) Entgegenhaltungen:
- EP-A1- 0 606 830
- EP-A1- 2 106 902
- EP-A2- 1 095 761
- EP-A2- 1 431 023
- JP-A- 2009 226 817
- US-A- 5 766 725
- US-A1- 2002 043 329
- US-A1- 2003 051 794
- US-A1- 2010 071 844
- DATABASE WPI Week 200132 Thomson Scientific, London, GB; AN 2001-306545 XP002680731, -& NL 1 012 503 C2 (VMI EPE HOLLAND BV) 3. Januar 2001 (2001-01-03)

## Beschreibung

Die Erfindung betrifft ein Verfahren zum Herstellen einer Halbzeug-Bahn mit den Merkmalen des Oberbegriffs des Anspruchs 1.

Ein derartiges Verfahren ist aus US 5 766 725 A bekannt. Die Bahn wird aus mehreren Segmenten zusammengesetzt, die jeweils auf einer Trennlage angeordnet sind, wobei die Trennlagen der Segmente miteinander verbunden werden.

In vielen Bereichen der Technik werden Bauteile aus faserverstärktem Kunststoff verwendet. Bauteile aus faserverstärktem Kunststoff haben gegenüber Bauteilen aus Metall den Vorteil höherer spezifischer mechanischer Eigenschaften. Darüber hinaus können Kunststoffe auch in Bereichen eingesetzt werden, wo Metalle korrodieren würden.

EP 2 301 735 A2 zeigt ein Halbzeug und einen Halbzeugverbund sowie Herstellungsverfahren für dieses Halbzeug. Dabei werden unidirektional gerichtete Fasern zwischen zwei Lagen aus thermoplastischem Kunststoff angeordnet. Dieser Verbund bildet dann eine Art "Blech", das man ähnlich wie ein Metallblech umformen kann. Dieses Halbzeug hat in der Richtung, in der sich die Fasern erstrecken, eine relativ hohe Zugfestigkeit. In eine Richtung quer zur Längserstreckung der Fasern ist die Zugfestigkeit deutlich geringer. Um die Zugfestigkeit zu erhöhen, ordnet man mehrere derartige Halbzeuge übereinander an, wobei sich die Winkellagen der Fasern voneinander unterscheiden.

Eine andere Möglichkeit, ein Halbzeug mit einer erhöhten Zugfestigkeit in mehreren Richtungen zu erzeugen, besteht in der Herstellung eines so genannten Multiaxial-Geleges. Hier verwendet man mehrere Fadenscharen, die aufeinander gelegt werden. In jeder Fadenschar sind die Fäden unidirektional angeordnet. Die Richtungen der Fäden unterscheiden sich dann zwischen den Fadenscharen.

US 2010/071844 A1 beschreibt ein Verfahren zum Herstellen von Gurtelementen für Autoreifen. Hier werden Segmente von einem Band abgetrennt. Das Band weist eine Vielzahl von Verstärkungscords, beispielsweise Stahlcords, auf, die in einen unvulkanisierten Gummi eingebettet sind. Die abgetrennten Segmente werden um einen vorbestimmten Winkel verdreht und dann in einander überlappender Weise auf einem Förderband aufeinander gelegt. Die einander überlappenden Abschnitte werden aufeinander gepresst.

EP 0 606 830 A1 beschreibt ein Verfahren zum Herstellen einer Prepregplatte aus faserverstärktem Kunststoff. Hier werden von zwei Vorratsbahnen jeweils Segmente abgetrennt, wobei eine Vorratsbahn unter einem rechten Winkel zu ihrer Längsrichtung durchtrennt wird, während die andere Vorratsbahn unter einem spitzen Winkel zu ihrer Längsrichtung durchtrennt wird. Im letzten Fall werden die Segmente nebeneinander angeordnet und stumpf zusammen geschweißt.

EP 1 431 023 A2 beschreibt eine Vorrichtung und ein Verfahren zum Herstellen eines Lagenmaterials für Reifen, insbesondere Radialgürtelreifen. Hier werden Streifen aus einem kalandrierten Material, die Verstärkungsteile haben, unter einem rechten Winkel durchtrennt. Die dadurch gebildeten Segmente werden an ihren bisherigen Längsseiten zusammengesetzt und bilden eine Stumpfnaht. Zum Verstärken dieser Stumpfnaht wird ein Gummistreifen über die Stumpfnaht gelegt.

EP 2 106 092 A1 beschreibt eine Zuführvorrichtung zum Zuführen einer länglich ausgebildeten Bahn zu einer Zuführvorrichtung. Die Bahn wird unter einem Winkel durchtrennt, so dass sich Segmente ergeben, die später dadurch zusammengefügt werden sollen, dass die hintere Kante eines Segments und die Vorderkante eines weiteren Segments miteinander in Kontakt gebracht werden.

US 2003/051794 A1 beschreibt eine Vorrichtung zum Herstellen einer Lage für einen Autoreifen. Hier wird zunächst ein Materialbahnstreifen durch einen Kalander so präpariert, dass seine seitlichen Enden im Querschnitt spitz abgeschrägt sind. Diese Bahn wird dann in Segmente unterteilt, wobei die Segmente auf einem Förderband oder auf einer Trommel abgelegt werden, um eine Materialbahnlage zu bilden. Es wird ein Gummimaterial verwendet.

In beiden Fällen erfordert die Herstellung eines Verbundwerkstoffs oder eines Multiaxial-Geleges einen erheblichen Aufwand. Wenn die Fäden oder Fasern unterschiedliche Richtungen haben sollen, müssen die Fadenscharen oder Halbzeuge auch aus unterschiedlichen Richtungen zugeführt werden. Dies erfordert einen relativ großen Bauraum und in der Regel auch eine relativ komplizierte Steuerung, weil die einzelnen Lieferwerke aufeinander abgestimmt werden müssen.

Der Erfindung liegt die Aufgabe zugrunde, die Herstellung von multiaxial verstärkten Werkstoffen zu erleichtern.

Zur Lösung dieser Aufgabe wird ein Verfahren mit den Merkmalen des kennzeichnenden Teils des Anspruchs 1 gelöst.

In diesem Fall kann man als Vorratsbahn beispielsweise ein Halbzeug verwenden, wie es aus EP 2 301 735 A2 bekannt ist. Ein derartiges Halbzeug lässt sich relativ einfach herstellen, weil man die beiden Lagen aus Kunststoff und auch die Fasern oder Fäden aus der gleichen Richtung zu führen und den daraus gebildeten Stapel in die gleiche Richtung abziehen kann. Die Begriffe "Fäden" und "Fasern" sollen hier gleichartig verwendet werden. Natürlich lasen sich auch andere Halbzeuge verwenden, die als Flächematerial aus Fasern und Kunststoffen ausgebildet sind, wobei die Fasern alle die gleiche Ausrichtung aufweisen. Erfindungsgemäß kann man nun aus einer Vorratsbahn, bei der die Fasern in Hauptrichtung, d.h. in Längsrichtung der Vorratsbahn, verlaufen, mit zwei einfachen Schritten eine Halbzeug-Bahn herstellen, bei der die Fasern einen vorbestimmten Winkel, der größer 0° ist, mit der Längsrichtung einschließen. Hierzu ist es lediglich erforderlich, von der Vorratsbahn Segmente abzutrennen und diese Segmente dann unter dem vorbestimmten Winkel zur Längsrichtung nebeneinander anzuordnen und miteinander zu verbinden. Das Abtrennen der Segmente von der Vorratsbahn kann sowohl im laufenden Herstellungsverfahren erfolgen als auch in einem vorgelagerten Schritt, wobei die Segmente dann in einem Zwischenspeicher vorrätig gehalten werden können. Man erhält dann eine Halbzeug-Bahn, bei der die Fasern nicht mehr in Längsrichtung gerichtet sind, sondern unter dem vorbestimmten Winkel zur Längsrichtung. Da man diesen Winkel bei unterschiedlichen Halbzeug-Bahnen auch unterschiedlich ausgestalten kann, hat man auf einfache Weise die Voraussetzung dafür geschaffen, einen multiaxial verstärkten Werkstoff herzustellen. Hierzu ist es lediglich erforderlich, mindestens zwei Halbzeug-Bahnen mit unterschiedlichen Faserwinkeln, d.h. den Winkeln der Fasern zur Längsrichtung, zu verwenden.

Man verbindet benachbarte Segmente durch einen Streifen miteinander, der die benachbarten Längskanten überlappt. Man kann einen Streifen aus dem Material der Matrix der Segmente verwenden, der die beiden Längskanten überlappt und die Verbindung mit Hilfe dieses Streifens vornehmen, der mit beiden benachbarten Segmenten verschweißt werden kann. Zur Wärmezufuhr können Wärmequellen, wie Laser, Heißluft oder Infrarotstrahlung verwendet werden. Eine andere Möglichkeit für das Verschweißen ist die Verwendung von Ultraschall. Eine weitere stoffschlüssige Verbindung kann durch Klebstoffe erfolgen. Diese Klebstoffe können als Klebepunkte oder Heißkleber oder Klebeband aufgebracht werden. Es ist aber auch möglich, dass man ein Klebeband verwendet, dass beide Segmente überlappt, wobei das Klebeband aus dem Material der Matrix gebildet ist, auf das Klebstoff aufgetragen ist.

Alternativ dazu verwendet man eine Vorratsbahn mit einem Randstreifen, wobei der Randstreifen eines Segments ein benachbartes Segment überlappt. Der Randstreifen kann beispielsweise ausschließlich aus Matrixmaterial bestehen, also frei von Verstärkungsfasern sein. Er kann beispielsweise auch nur eine Lage aus einem Kunststoffmaterial aufweisen, wenn die Fasern der Vorratsbahn ansonsten zwischen zwei Lagen eines Kunststoffmaterials eingebettet sind. Auf diese Weise lässt sich eine sehr stabile Verbindung zwischen zwei benachbarten Segmenten erreichen.

Vorteilhafterweise ist vorgesehen, dass man die Längskanten benachbarter Segmente Stoß an Stoß legt. Man erhält dann eine Halbzeug-Bahn, die entlang ihrer Längsrichtung
relativ homogen ist. Störstellen an den Längskanten können vermieden werden.

Vorzugsweise trennt man die Segmente von der Vorratsbahn unter dem vorbestimmten Winkel ab. Damit ist es möglich, die Trennlinie, an der die Trennung der Segmente von der Vorratsbahn erfolgt, als Längskante der Halbzeug-Bahn zu verwenden. Dies spart in erheblichem Maße Material ein, weil Abfall vermieden werden kann. Das Abtrennen der Segmente kann mit Ultraschall, mit einem Messerschnitt, beispielsweise mit einem Rollmesser oder einem Quetschmesser, mit einer Schere, mit einem Bandmesser oder mit einer Guillotine oder einem Fallmesser erfolgen.

Vorzugsweise führt man die Vorratsbahn unter dem vorbestimmten Winkel zur Längsrichtung zu und trennt die Segmente parallel zur Längsrichtung ab. In diesem Fall kann man die Segmente ohne weitere Richtungsänderung verwenden und sie nebeneinander anordnen. Dies erspart weitere Handhabungsschritte.

Vorzugsweise trennt man die Segmente mit einer Länge ihrer Längskanten von der Vorratsbahn ab, die der Breite der Halbzeug-Bahn dividiert durch den Kosinus des vorbestimmten Winkels entspricht. Die Längskanten sind die Kanten, die parallel zur Hauptrichtung der Vorratsbahn verlaufen. Durch die Wahl der Länge erhält man Segmente, die nach dem Zusammenfügen genau die Breite der Halbzeug-Bahn haben. Eine weitere Bearbeitung, etwa ein Beschneiden zum Erzeugen der gewünschten Breite, ist nicht mehr erforderlich.

Bevorzugterweise legt man die Segmente auf einer in Längsrichtung bewegbaren Transporteinrichtung ab. In diesem Fall können die Segmente nach dem Ablegen auf der Transporteinrichtung weiterbewegt werden, so dass genügend Raum zum Ablegen des nächsten Segments zur Verfügung steht. Die Transporteinrichtung kann taktweise arbeiten, so dass sie nach dem Auflegen eines Segments um die Breite des Segmentes weiter bewegt wird. Sie kann aber auch kontinuierlich arbeiten. In diesem Fall muss sie um die Breite eines Segments weiter bewegt werden, solange das nächste Segment zugeführt wird.

Alternativ oder zusätzlich dazu kann vorgesehen sein, dass man die Segmente miteinander zur Halbzeug-Bahn verbindet und durch einen Zug auf die Halbzeug-Bahn weiter transportiert. Vor dem Weitertransport muss die Verbindung zwischen benachbarten Segmenten noch nicht einmal vollständig sein. Sie kann auch während oder nach der Bewegung der Halbzeug-Bahn noch vollständig fertig gestellt werden.

Vorzugsweise werden die Segmente während und/oder nach dem Verbinden zumindest im Bereich ihrer Verbindung miteinander einer Druckbehandlung unterworfen. Diese Druckbehandlung hat zwei Aufgaben. Zum einen dient sie dazu, die Verbindung zwischen benachbarten Segmenten fest und dauerhaft zu machen. Zum anderen dient sie dazu, eine möglicherweise durch das Verbinden hervorgerufene Dickenänderung der Halbzeug-Bahn im Bereich der Verbindungsstelle wieder auszugleichen. Man kann also dafür sorgen, dass die Halbzeug-Bahn eine gleichförmige Dicke aufweist, was sich positiv auf die spätere Verarbeitbarkeit auswirkt.

Vorzugsweise wickelt man die Halbzeug-Bahn zu einer Wickelrolle auf und/oder die Vorratsbahn von einer Vorratsrolle ab. Die Verwendung von mindestens einer Rolle erleichtert die Handhabung.

Die Erfindung betrifft auch eine Vorrichtung zum Herstellen einer Halbzeug-Bahn, die eine Längsrichtung, eine Kunststoffmatrix und eine Vielzahl von unidirektional gerichtet festgelegten Fasern aufweist, die einen vorbestimmten Winkel größer 0° mit der Längsrichtung einschließen, wobei die Vorrichtung aufweist: eine Spendeanordnung zum Ausgeben von Segmenten, die eine Hauptrichtung, eine Kunststoffmatrix und eine Vielzahl von unidirektional gerichtet festgelegten Fasern aufweist, die einen Winkel gleich 0° mit der Hauptrichtung einschließen, eine Ausrichteinrichtung zum Anordnen der Segmente nebeneinander, so dass ihre parallel zur Hauptrichtung verlaufenden Längskanten parallel zueinander und benachbart sind und den vorbestimmten Winkel mit der Längsrichtung einschließen, und einer Verbindungseinrichtung zum Ver binden der benachbarten Segmente im Bereich ihrer Längskanten.

Die Spendeanordnung kann beispielsweise eine Rolle der Vorratsbahn und eine Trenneinrichtung aufweisen. Auch können mehrere Rollen der Vorratsbahn nebeneinander angeordnet werden, wobei alle Vorratsrollen gleichzeitig jeweils ein Segment abgeben können. Sie kann aber auch einen Speicher aufweisen, in dem Segmente, die zuvor von der Vorratsbahn abgetrennt worden sind, vorrätig gehalten werden. Mit einer derartigen Vorrichtung lässt sich auf einfache Weise das weiter oben geschilderte Verfahren durchführen.

Vorzugsweise weist die Ausrichteinrichtung eine Transporteinrichtung auf und die Verbindungseinrichtung ist gemeinsam mit der Transporteinrichtung in Längsrichtung bewegbar. Damit steht für die Verbindung zwischen benachbarten Segmenten eine relativ große Zeit zur Verfügung. Der Schritt des Verbindens kann durchgeführt werden, während die Transporteinrichtung die sich bildende Halbzeug-Bahn um die Breite eines Segments weiter bewegt. Wenn die Verbindungseinrichtung mehrere Verbindungsstellen aufweist, dann steht für das Verbinden von benachbarten Segmenten entsprechend mehr Zeit zur Verfügung.

Vorzugsweise weist die Verbindungseinrichtung eine Andruckeinrichtung auf. Die Andruckeinrichtung kann beispielsweise durch eine Andruckrolle, durch einen Nip zwischen zwei Presswalzen oder durch einen Pressbalken realisiert werden. Die Andruckeinrichtung kann die Segmente im Bereich ihrer Verbindungsstelle, also im Bereich ihrer Längskanten, flächig zusammendrücken, so dass die Halbzeug-Bahn über ihre Länge eine gleichförmige Dicke aufweist und die Verbindung stabil wird.

Die Erfindung wird im Folgenden anhand eines bevorzugten Ausführungsbeispiels in Verbindung mit einer Zeichnung beschrieben. Hierin zeigt die
- einzige Fig.: eine schematische Darstellung zur Erläuterung der Herstellung einer Halbzeug-Bahn.

Die Fig. zeigt in stark schematisierter Form eine Halbzeug-Bahn 1, die eine durch einen Pfeil symbolisierte Längsrichtung 2 und eine Vielzahl von unidirektional gerichtet festgelegten Fasern 3 aufweist. Die Fasern 3 verlaufen unter einem vorbestimmten Winkel a zur Längsrichtung 2. Sie sind in eine nicht näher dargestellte Matrix aus Kunststoff eingebettet.

Um diese Halbzeug-Bahn herzustellen, wird eine Vorratsbahn 4 verwendet. Die Vorratsbahn 4 kann beispielsweise von einer Vorratsrolle 5 abgewickelt werden. Gegebenenfalls kann man auch mehrere Vorratsrollen 5 nebeneinander anordnen und entsprechend mehrere Vorratsbahnen 4 gleichzeitig abziehen. Die Vorratsbahn 4 kann aber auch online erzeugt werden. Die Vorratsbahn 4 kann, gegebenenfalls bereits in Form von Segmenten, auch aus einem Speicher oder Magazin entnommen werden.

Als Vorratsbahn ist beispielsweise die Bahn eines Halbzeugs verwendbar, das in EP 2 301 735 A2 beschrieben ist. So kann die Vorratsbahn 4 eine Vielzahl von unidirektional gerichteten festgelegten Fasern 6 aufweisen, die zwischen zwei Lagen aus thermoplastischem Kunststoff angeordnet sind. Ein anderer Aufbau ist natürlich denkbar. Die Vorratsbahn 4 weist aber eine Matrix aus einem Kunststoff auf, der die Fasern 6 in ihrer unidirektional gerichteten Ausrichtung festhält.

Die Vorratsbahn 4 weist eine durch einen Pfeil gekennzeichnete Hauptrichtung 7 auf. Die Hauptrichtung 7 ist die "Längsrichtung" der Vorratsbahn 4. Der Begriff "Hauptrichtung" wird zu Unterscheidungszwecken verwendet. Die Fasern 6 sind in Richtung der Hauptrichtung 7 ausgerichtet, d.h. sie verlaufen parallel zur Hauptrichtung 7, wobei der Begriff "parallel" nicht im mathematisch strengen Sinne zu verstehen ist.

Wie aus der Fig. zu erkennen ist, werden von der Vorratsbahn 4 Segmente 8 abgetrennt. Jedes Segment weist zwei Längskanten 9, 10 auf. Diese Längskanten sind parallel zur Hauptrichtung und somit parallel zu den Fasern 6 gerichtet. Die Längskanten stehen unter dem vorbestimmten Winkel a zur Längsrichtung 2.

Zum Abtrennen der Segmente 8 wird eine Trenneinrichtung 11 verwendet. Diese Trenneinrichtung durchtrennt die Vorratsbahn 4, beispielsweise mit Hilfe von Ultraschall, mit einem Messer, mit einer Schere, mit einem Bandmesser oder mit einem Fallmesser oder einer Guillotine. Die Trenneinrichtung 11 erzeugt dabei eine Trennlinie 12, die parallel zur Längsrichtung 2 gerichtet ist. Die Vorratsbahn 4 wird unter dem Winkel a zur Längsrichtung 2 zugeführt.

Die Trenneinrichtung 11 trennt die Segmente 8 mit einer Länge ihrer Längskanten 9, 10 ab, die einer Breite B der Halbzeug-Bahn dividiert durch den Kosinus des Winkels a entspricht. Die Längskanten 9, 10 sind also länger als die Breite B der Halbzeug-Bahn 1. Sie sind aber genau so groß, dass man die Segmente 8 später zu der Halbzeug-Bahn mit der gewünschten Breite B zusammensetzen kann.

Da die Trennlinie 12 parallel zur Längsrichtung 2 liegt, ist eine Richtungsänderung der Segmente 8 vor dem Zusammenfügen zu der Halbzeug-Bahn 1 nicht weiter erforderlich.

Man kann die Segmente 8 natürlich auch aus einem Magazin oder einem Speicher entnehmen, in dem sie zuvor abgelegt worden sind.

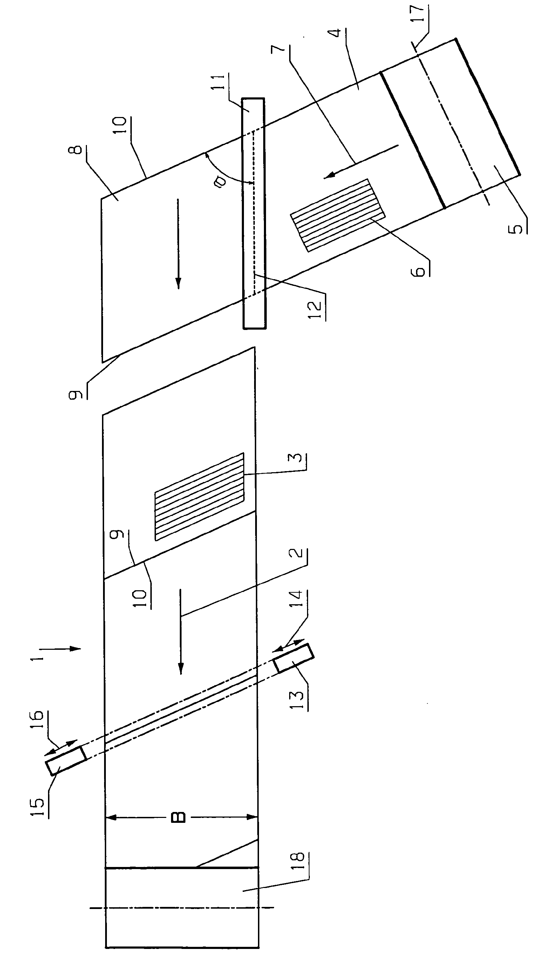

Die Segmente 8 werden eines nach dem anderen auf einer nicht näher dargestellten Fördereinrichtung abgelegt und in Längsrichtung 2 befördert. Sobald genügend Platz zur Verfügung steht, wird das nächste Segment 8 auf der Fördereinrichtung abgelegt. Die Darstellung in Fig. 1 zeigt das Segment 8 getrennt von der Halbzeug-Bahn 1. Diese Darstellung wurde gewählt, um die Erläuterung zu vereinfachen. Tatsächlich wird das Segment im Anschluss an die bereits fertig gestellte Halbzeug-Bahn 1 abgelegt.

Wenn die Segmente 8 unmittelbar nach dem Ablegen miteinander verbunden werden, dann bildet die Halbzeugbahn 1 selbst die Fördereinrichtung, d.h. durch einen Zug auf die Halbzeugbahn 1 wird Raum für das nächste Segment 8 geschaffen.

Die Verbindung von benachbarten Segmenten 8 an ihren Längskanten 9, 10 kann auf unterschiedliche Weise erfolgen. Man kann die Längskanten 9, 10 beispielsweise Stoß an Stoß legen und miteinander durch Wärmezufuhr oder Ultraschall verschweißen. Man kann auch ein die Längskanten 9, 10 überlappendes Band verwenden, das aus dem gleichen Material wie das Matrixmaterial der Vorratsbahn 4 gebildet ist, und dieses Band dann mit den Segmenten 8 verschweißen oder verkleben. Man kann auch ein Klebeband verwenden oder die Stoß an Stoß liegenden Längskanten 9, 10 direkt miteinander verkleben. Hierzu kann man beispielsweise einen Heißkleber verwenden. Man kann benachbarte Segmente 8 auch im Bereich ihrer Längskanten einander überlappen lassen und dann miteinander verschmelzen. Zur Wärmezufuhr sind gängige Quellen, wie Laser, Heißluft oder Infrarotstrahlung möglich.

Schematisch dargestellt ist eine Verbindungseinrichtung 13, die in Richtung eines Doppelpfeils 14 über die Halbzeug-Bahn 1 geführt werden kann, also über die beiden Längskanten 9, 10 von benachbarten Segmenten 8. Schematisch dargestellt ist ebenfalls eine Andruckeinrichtung 15, die in Richtung eines Doppelpfeils 16 über die Halbzeug-Bahn 1 geführt werden kann. Die Verbindungseinrichtung 13 und die Andrückeinrichtung 15 können getrennt voneinander oder gemeinsam tätig werden. Im letzten Fall können sie auch als gemeinsame Baugruppe ausgebildet sein.

Die Verbindungseinrichtung 13 kann während des Verbindens von benachbarten Segmenten 8 in Längsrichtung 2 verlagert werden, wenn die Transporteinrichtung kontinuierlich bewegt wird, um die Halbzeug-Bahn 1 kontinuierlich zu fördern. Die Verbindungseinrichtung 13 (Gleiches gilt natürlich auch für die Andruckeinrichtung 15) kann aber auch in Längsrichtung 2 stationär gehalten werden, wenn die Fördereinrichtung taktweise betätigt wird.

Die Erzeugung einer anderen Halbzeug-Bahn, bei der der Winkel a eine andere Größe hat, ist relativ einfach dadurch möglich, dass man die Beziehung zwischen der Hauptrichtung 7 und der Längsrichtung 2 ändert. Hierfür ist es vielfach lediglich erforderlich, dass man die Richtung der Achse 17 der Vorratsrolle 5 verändert. In gleicher Weise müssen dann auch die Bewegungsrichtungen 14, 16 der Verbindungseinrichtung 13 und der Andruckeinrichtung 15 verändert werden. Die Position und Lage der Trenneinrichtung 11 kann hingegen unverändert belassen werden.

In nicht näher dargestellter Weise kann man eine Kupplungseinrichtung vorsehen, die die Winkelausrichtung der Vorratsrolle 5 auf die Verbindungseinrichtung 13 und die Andruckeinrichtung 15 überträgt, so dass die Verbindungseinrichtung 13 und die Andruckeinrichtung 15 entlang der Längskanten 9, 10 der Segmente 8 bewegt werden können, auch wenn sich der Winkel a ändert.

Die Halbzeug-Bahn 1 kann zu einer Wickelrolle 18 aufgewickelt werden, um ihre Handhabung zu vereinfachen. Es ist jedoch auch möglich, von der Halbzeug-Bahn 1 Stücke mit einer gewünschten Größe abzutrennen, wenn man beispielsweise eine größere Anzahl derartiger Stücke benötigt. In diesem Fall kann man sich das Aufwickeln auf die Wickelrolle 18 ersparen und die Stücke z.B. in einem Magazin ablegen.

Wenn man eine Halbzeugbahn 1 mit einem geänderten Winkel a erzeugen möchte, kann man alternativ oder zusätzlich zur Änderung der Richtung der Achse 17 der Vorratsrolle auch die Aufwickelrichtung verändern, die durch die Achse der Wickelrolle 18 definiert ist.

## Patentansprüche

1. Verfahren zum Herstellen einer Halbzeug-Bahn (1), die eine Längsrichtung(2), eine Kunststoffmatrix und eine Vielzahl von unidirektional gerichtet festgelegten Fasern (3) aufweist, die einen vorbestimmten Winkel (a) größer 0° mit der Längsrichtung (2) einschließen, wobei das Verfahren die folgenden Schritte aufweist:
Verwenden einer Vorratsbahn (4), die eine Hauptrichtung (7), eine Kunststoffmatrix und eine Vielzahl von unidirektional gerichtet festgelegten Fasern (6) aufweist, die einen Winkel gleich 0° mit der Hauptrichtung (7) einschließen,
Abtrennen von Segmenten (8) von der Vorratsbahn,
Anordnen der abgetrennten Segmente (8) nebeneinander, so dass ihre parallel zur Hauptrichtung (7) verlaufenden Längskanten (9, 10) parallel zueinander und benachbart sind und den vorbestimmten Winkel (a) mit der Längsrichtung (2) einschließen, und
Verbinden der benachbarten Segmente (8) im Bereich ihrer Längskanten (9, 10), **dadurch gekennzeichnet, dass** man benachbarte Segmente (8) durch einen Streifen aus dem Material der Kunststoffmatrix miteinander verbindet, der die benachbarten Längskanten (9, 10) überlappt, oder man eine Vorratsbahn (4) mit einem Randstreifen verwendet, wobei der Randstreifen eines Segments (8) ein benachbartes Segment (8) überlappt.

2. Verfahren nach Anspruch 1, **dadurch gekennzeichnet, dass** man die Längskanten (9, 10) benachbarter Segmente (8) Stoß an Stoß legt.

3. Verfahren nach Anspruch 1 oder 2, **dadurch gekennzeichnet, dass** man die Segmente (8) von der Vorratsbahn (4) unter dem vorbestimmten Winkel (a) abtrennt.

4. Verfahren nach Anspruch 3, **dadurch gekennzeichnet, dass** man die Vorratsbahn (4) unter dem vorbestimmten Winkel (a) zur Längsrichtung (2) zuführt und die Segmente (8) parallel zur Längsrichtung (2) abtrennt.

5. Verfahren nach Anspruch 3 oder 4, **dadurch gekennzeichnet, dass** man die Segmente (8) mit einer Länge ihrer Längskanten (8, 9) von der Vorratsbahn (4) abtrennt, die der Breite (B) der Halbzeug-Bahn dividiert durch den Kosinus des vorbestimmten Winkels (a) entspricht.

6. Verfahren nach einem der Ansprüche 1 bis 5, **dadurch gekennzeichnet, dass** man die Segmente (8) auf einer in Längsrichtung (2) bewegbaren Transporteinrichtung ablegt.

7. Verfahren nach einem der Ansprüche 1 bis 6, **dadurch gekennzeichnet, dass** man die Segmente (8) miteinander durch einen Zug auf die Halbzeug-Bahn (1) weitertransportiert.

8. Verfahren nach einem der Ansprüche 1 bis 7, **dadurch gekennzeichnet, dass** man die Segmente (8) stoffschlüssig miteinander verbindet.

9. Verfahren nach Anspruch 8, **dadurch gekennzeichnet, dass** die Segmente (8) während und/oder nach dem Verbinden zumindest im Bereich ihrer Verbindung miteinander einer Druckbehandlung unterworfen werden.

10. Verfahren nach einem der Ansprüche 1 bis 9, **dadurch gekennzeichnet, dass** man die Halbzeug-Bahn (1) zu einer Wickelrolle (18) aufwickelt und/oder die Vorratsbahn (4) von einer Vorratsrolle (5) abwickelt.

## Claims

1. Method for producing a semi-finished web (1) having a longitudinal direction (2), a plastic matrix, and a plurality of fibers (3) fixed in a unidirectionally oriented manner enclosing a predetermined angle (a) greater than 0° to the longitudinal direction (2), wherein the method comprises: using a supply web (4) having a main direction (7), a plastic matrix, and a plurality of fibers (6) fixed in a unidirectionally oriented manner enclosing an angle (a) of 0° to the main direction (7), separating segments (8) from the supply web (4), arranging the separated segments (8) next to one another so that the longitudinal edges (9, 10) of adjacent segments (8) are parallel to the main direction (7) and to one another, and enclose the predetermined angle (a) to the longitudinal direction (2), and connecting the adjacent segments (8) in a region of their longitudinal edges (9, 10), **characterized in that** adjacent segments (8) are connected by a strip of the material of the plastic matrix that overlaps the adjacent longitudinal edges (9, 10) or a supply web (4) is used having an edge strip, wherein the edge strip of one segment overlaps an adjacent segment (8).

2. Method according to claim 1, **characterized in that** the longitudinal edges (9, 10) of adjacent segments (8) are laid edge to edge.

3. Method according to claim 1 or 2, **characterized in that** the segments (8) are separated from the supply web (4) at the predetermined angle (a).

4. Method according to claim 3, **characterized in that** a supply web (4) is fed at the predetermined angle (a) to the longitudinal direction (2) and the segments (8) are separated along a line parallel to the longitudinal direction (2).

5. Method according to claim 3 or 4, **characterized in that** the segments (8) are separated from the supply web (4) with a length of the longitudinal edges (9, 10) corresponding to the width (B) of the semi-finished web (1) divided by the cosine of the predetermined angle (a).

6. Method according to any of claims 1 to 5, **characterized in that** the segments (8) are deposited on a transport device movable in the longitudinal direction (2).

7. Method according to any of claims 1 to 6, **characterized in that** the segments (8) together are transported by a pull on the semi-finished web (1).

8. Method according to any of claims 1 to 7, **characterized in that** the segments (8) are connected to one another by adhesive force.

9. Method according to claim 8, **characterized in that** the segments (8) at least in the region of their connection to one another are subjected to a pressure treatment during and/or after connecting them.

10. Method according to any of claims 1 to 9, **characterized in that** the semi-finished web (1) is wound to form a lap roll (18) and/or the supply web (4) is unwound from a supply roll (18).

## Revendications

1. Procédé servant à fabriquer une bande de produit semi-fini (1), qui présente un sens longitudinal (2), une matrice en plastique et une pluralité de fibres (3) posées selon une direction unidirectionnelle, lesquelles forment un angle (a) prédéterminé supérieur à 0° avec le sens longitudinal (2), dans lequel le procédé présente les étapes suivantes consistant à :
utiliser une bande de réserve (4), qui présente un sens principal (7), une matrice en plastique et une pluralité de fibres (6) posées selon un sens unidirectionnel, lesquelles forment un angle égal à 0° avec le sens principal (7),
séparer de la bande de réserve des segments (8),
disposer les segments (8) séparés les uns à côté des autres de sorte que leurs arêtes longitudinales (9, 10) s'étendant de manière parallèle par rapport au sens principal (7) sont parallèles les unes par rapport aux autres et adjacentes et forment l'angle (a) prédéterminé avec le sens longitudinal (2), et
assembler les segments (8) adjacents dans la zone de leurs arêtes longitudinales (9, 10), **caractérisé en ce qu'**on assemble des segments (8) adjacents les uns aux autres par un ruban composé du matériau de la matrice en plastique, lequel ruban chevauche les arêtes longitudinales (9, 10) adjacents, ou **en ce qu'**on utilise une bande de réserve (4) pourvue d'un ruban de bordure, dans lequel le ruban de bordure d'un segment (8) chevauche un segment (8) adjacent.

2. Procédé selon la revendication 1, **caractérisé en ce qu'**on place en bout à bout les arêtes longitudinales (9, 10) des segments (8) adjacents.

3. Procédé selon la revendication 1 ou 2, **caractérisé en ce qu'**on sépare les segments (8) de la bande de réserve (4) selon l'angle (a) prédéterminé.

4. Procédé selon la revendication 3, **caractérisé en ce qu'**on amène la bande de réserve (4) selon l'angle (a) prédéterminé par rapport au sens longitudinal (2), et **en ce qu'**on sépare les segments (8) de manière parallèle par rapport au sens longitudinal (2).

5. Procédé selon la revendication 3 ou 4, **caractérisé en ce qu'**on sépare de la bande de réserve (4) les segments (8) avec une longueur de leurs arêtes longitudinales (8, 9), laquelle longueur correspond à la largeur (B) de la bande de produit semi-fini divisée par le cosinus de l'angle (a) prédéterminé.

6. Procédé selon l'une quelconque des revendications 1 à 5, **caractérisé en ce qu'**on dépose les segments (8) sur un dispositif de transport pouvant être déplacé dans le sens longitudinal (2).

7. Procédé selon l'une quelconque des revendications 1 à 6, **caractérisé en ce qu'**on poursuit le transport des segments (8) les uns avec les autres par une traction sur la bande de produit semi-fini (1).

8. Procédé selon l'une quelconque des revendications 1 à 7, **caractérisé en ce qu'**on assemble les uns aux autres les segments (8) par liaison de matière.

9. Procédé selon la revendication 8, **caractérisé en ce que** les segments (8) sont soumis à un traitement par pression au cours et/ou après l'assemblage au moins dans la zone de leur assemblage les uns aux autres.

10. Procédé selon l'une quelconque des revendications 1 à 9, **caractérisé en ce qu'**on enroule la bande de produit semi-fini (1) en un rouleau d'enroulement (18), et/ou **en ce qu'**on déroule d'un rouleau de réserve (5) la bande de réserve (4).
